Europäisches Patentamt

European Patent Office

Office européen des brevets

(11) Publication number: **0 109 678**
**A1**

## (12) EUROPEAN PATENT APPLICATION

(21) Application number: **83111554.8**

(22) Date of filing: **18.11.83**

(51) Int. Cl.³: **G 11 B 5/55**
**G 11 B 21/02**

(30) Priority: **19.11.82 US 443115**
**07.03.83 US 472541**
**07.03.83 US 472542**

(43) Date of publication of application:
**30.05.84 Bulletin 84/22**

(84) Designated Contracting States:
**DE FR GB IT NL SE**

(71) Applicant: **Microscience International Corporation**
**575 East Middlefield Road**
**Mountain View, Cal. 94043(US)**

(72) Inventor: **Liu, Jeffrey**
**3357 Fabled Oak Court**
**San Jose, CA 95148(US)**

(72) Inventor: **Guzik, Nahum**
**224 Lassen Avenue**
**Mountain View, CA 94043(US)**

(72) Inventor: **Tong, Chun Hua**
**1611 Garvey Place**
**San Jose, CA 95132(US)**

(74) Representative: **Behrens, Dieter G. et al,**
**Patentanwälte WUESTHOFF-V.**
**PECHMANN-BEHRENS-GOETZ Schweigerstrasse 2**
**D-8000 München 90(DE)**

(54) Compact, high-density disk storage system.

(57) In a magnetic disk drive system, an apparatus for facilitating movement of a transducer head carriage (28) relative to a rotating magnetic disk (12) and stationary chassis (10), including a three-arm band actuator (106,108,110) for coupling a stepper motor (30) to the carriage, and an extruded metal carriage base (154) for retaining linear bearings (160,162) which ride along track rods (150) as the carriage is advanced by the stepper motor. Two magnetic read/write heads (33,33) are mounted on a carriage for concurrent movement, with one head (32) moving along a radial path and the other (33) being radially and circumferentially offset and moving along a parallel path of travel. An "S" shaped ribbon cable (54) connects the transducer heads (32,33) to the chassis, and expands and contracts as the carriage moves.

./...

EP 0 109 678 A1

FIG.2

PATENTANWÄLTE

WUESTHOFF – v. PECHMANN – BEHRENS – GOETZ

PROFESSIONAL REPRESENTATIVES BEFORE THE EUROPEAN PATENT OFFICE
MANDATAIRES AGRÉÉS PRÈS L'OFFICE EUROPÉEN DES BREVETS

D-8000 MÜNCHEN 90

SCHWEIG 0109678

TELEFON: (089) 66 20 51
TELEGRAMM: PROTECTPATENT
TELEX: 524070

Microscience Int. Corp.
Mountain View, Cal., USA

EP-57 722

## COMPACT, HIGH-DENSITY DISK STORAGE SYSTEM

The present invention is directed to magnetic disk information storage systems, and more specifically to a dual read-write head arrangement and to structures associated with a movable carriage for such read-write heads.

In magnetic disk systems, bits of information are typically stored in concentric circular tracks on one or both surfaces of the disk. An electromagnetic transducer, or "head", located in close proximity to the recording surface is used to write the information on the disk, and subsequently read it, while the disk is continuously rotating. Data recovery involves detecting the presence of flux transitions beneath a selected head. Magnetized particles that pass beneath the head generate a magnetic field that induces a current flow in the head circuit. The direction of current is determined by the polarity of this magnetic field.

To enable the head to access the various tracks on the disk, it is mounted on a movable carriage so as to be translatable in a generally radial direction. The carriage may take the form of a pivotable tone arm type of arrangement, similar to that seen on many phonographic turn-tables, in which the head moves along a generally radial path across the surface of the disk. Alternatively, the carriage can be arranged to linearly translate along a path that is radially

-2-

oriented with respect to the axis of rotation of the disk.

Initially such magnetic disks were relatively large and employed relatively large storage disks or drums, e.g. 35 cm or greater in diameter. Because of trends toward the reduction in size of computer systems in general, a demand has resulted for smaller disk storage systems, such as a Winchester disk drive system with a 13.3 cm hard disk.

It is a general object of the present invention to provide techniques for producing small, economical disk drive systems having high storage capacity.

In the moving carriage systems, electrical connections must be made between each transducer head and stationary amplifier circuitry attached to the system chassis. In the past, single "U" shaped cable loops have been employed to provide the necessary "play" between the carriage and chassis. Two such prior art cables are illustrated in Figures 5a and 5b, discussed below. U.S. Patent No. 4,285,018 to Mulvany et al discloses a disk drive system employing a "U" shaped cable 42 which connects radially driven heads to a stationary panel connector 76. U.S. Patent No. 4,331,991 to Morehouse et al and U.S. Patent No. 4,346,416 to Riggle et al show "U" shaped ribbon cables connecting moving "tone arm" mounted heads to stationary portions of the respective systems.

One factor contributing to the amount of information that can be stored on the disk, i.e., its packing density, is the resolution with which the head is positioned during its traversal of the disk. Typically, the carriage on which the head is mounted is moved with a stepper motor so that its position can be precisely defined. The best stepper motors presently available have about 0.9°
angular resolution and provide approximately 306 discrete
steps through which the head can be advanced.
Consequently, 306 tracks of information can be stored on
the disk.

In order to increase packing density, it is possible to
use two magnetic heads on the same side of the disk as
disclosed, for example, in U.S. Patent No. 4,196,456. The
two heads might be disposed for concurrent travel along
the same path and radially spaced from each other. The
distance between them is related to one-half the distance
between adjacent steps in the movement across the disk,
so that the heads are capable of reading and writing
information on two respective inerlaced sets of tracks.
In other words, as one head moves across the surface of
the disk in discrete steps the other head would be
positioned in the spaces between two adjacent steps.
Thus, the number of tracks and hence the pcking density
could be increased by as much as 100 %.

Other approaches might have the two heads travelling
along different radial paths, either concurrently or
independently, to either increase packing density or
decrase access time.

In the past, however, the dual head concept has been
limited in use to systems having relatively large storage
disks or drums, e.g. 35 cm or greater in diameter. The
relatively large size of these disks provides ample room
to locate two heads in line. Because of limited space
considerations, two heads have not been used heretofore
in small disk storage systems, such as a Winchester disk
drive that has a 13.3 cm disk, for example.

Therefore it is the general object of the invention to provide for higher storage capacity in compact, high density disk drives, expecially of the Winchester type, the hard disk diameter not exceding 13.3 cm.

Tho this end it is a specific object of the invention to optimize the utilization of available storage space on the surface of a magnetic recording disk that is used in an environment with small space allowances by improving the dual head arrangement for use in connection with magnetic recording disks, particularly for use in Winchester type disk drive units.

Reduction in size of the disk drive unit serverely limits the space available for a free-flexing cable. Cable fatigue, excessive cable length and excessive or uncontrolled cable excursion also present design problems.

Therefor it is a further related object of the invention to provide a flexing connector cable assembly and associated dystem layout which is reliable and yet has a very compact configuration by reducing overall cable length between the heads and a system pre-amplifier and which has a compact arrangement configured to reduce fatigue on the cable caused by the flexing and which inhibits unwanted cable excursion from a defined volume within the system.

Reduction in size of disk drive units and the requirements for higher density information storage has created difficulties in the provision of components with acceptable dimensional and alignment tolerances. This is particularly true with the carriage and the carriage drive mechanism. Distances on the order of .01 mm can determine whether the transducer heads are positioned on the correct information tracks.

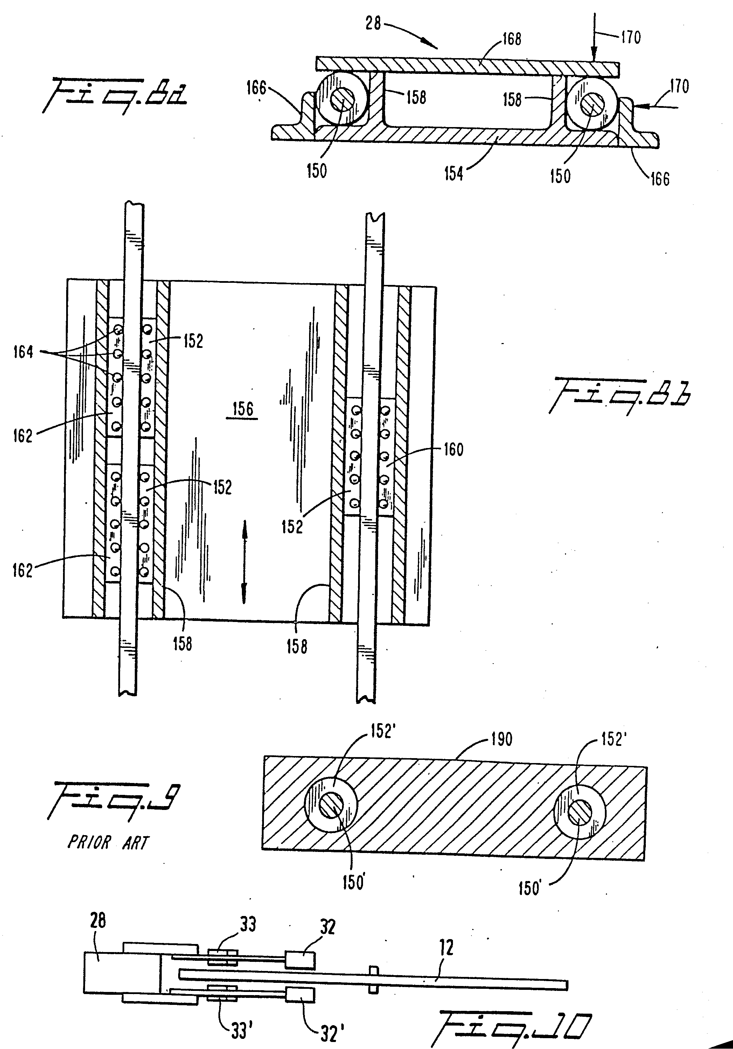

In the past, carriages have been dirven along a track by a stepper motor coupled to the carriage by a band actuator. A prior art band actuator is shown in Figure 7 and discussed below. Problems are encountered in the prior art system if the stepper motor, bands and carriage arms, to which the bands are attached, are improperly dimensioned or aligned. Excessive band wear and mis-positioning of the heads may result.

Accordingly, it is a further related object of the invention to provide a band actuator system which allows for slight deviations in the size and alignment of the associated system components and which inhibits band wear and mispositioning.

A related problem in carriage systems involves the tracks and bearings which constrain the carriage to move along a radial path in response to the band actuator. Thus the invention aims at provding a small, inexpensively fabricateable, high tolerance carriage and track system.

The solutions of the objects of the invention are characterized whith their further developments in the apended claims.

The general objects is achieved by the invention and provides attendant advantages with a dual head arrangement in which both heads are mounted on the same movable carriage for concurrent movement as before, however, in a different way. One of the heads moves along a generally radial path. The other head is both radially and circumferentially offset from the first head and travels along a path that is parallel to that of the first one. Due to the radial offset, the two heads cover different, concentric sections of the disk. Each section might contain a number of tracks equal to the number of steps in the travel of the carriage, so that the packing density of the disk is essentially doubled. Furthermore, the circumferential offset provides the added space that is necessary to accommodate the second head and that is not available when they are placed in line.

The magnetic disk drive system includes a disk drive chassis and a mechanism for rotating the magnetic storage disk about an axis of rotation. An amplifier circuit, such as a pre-amplifier for signals from the system transducer heads, may be, as usually, fixed in a stationary position on the disk drive chassis. A movable cariage for one or more of the magnetic transducer heads is movably mounted on the disk drive chassis. A stepper motor can be provided to move the carriage along a radial path of motion.

Electrical connection between the moving heads and the stationary circuits is provied by a novel flexible multi-conductor ribbon cable. The ribbon cable includes a first portion fixed to the carriage and electrically connected to the transducer heads, a second portion fixed to the disk drive chassis, and a third portion located between the first and second portions and configured in an "S" figure.

In a preferred embodiment the "S" figure lies in a plane generally perpendicular to the axis of rotation of the magnetic disk. An input section of the amplifier circuit is located on a circuit board whose principal plane is parallel to the axis of rotation of the disk. The "S" shaped figure expands and contracts along a radial line of movement of the carriage. The "S" shaped third portion is constrained to lie between the location of the magnetic disk, the circuit board and the stepper motor.

The "S" shaped portion of the cable is configured so that it extends away from the carriage and away from the axis of movement of the carriage, curves back inwardly toward the axis of movement, passes the axis of movement and extends away from the axis of movement, and then curves back toward the axis of movement until it reaches a point of attachment with the disk drive chassis.

The movable carriage rides on a carriage track. The carriage is formed with a first arm and a second arm, parallel to the first arm, both arms being perpendicular to the path of radial motion of the carriage along the track. A drive mechanism is provided for moving the carriage along the track including a stepper motor stationary with respect to the track and having a rotating shaft parallel to the first and second arms. A first flexible band is attached to the first arm and to the shaft so that the band is wound and unwound about the shaft as the shaft is rotated. A second flexible band is attached to the first arm, at a point displaced from the first band, and attached to the shaft at a point displaced from the first band. The second band is wound and unwound about the shaft as the shaft rotates. Each of the first and second bands contain a spring for maintaining a tension on the band. Finally, a third flexible band can be attached to the second arm of the carriage and to the shaft at a point between the points of attachment of the first and second bands. In a like fashion, the third band is wound and unwound about the shaft as the shaft rotates. The third band does not contain a tensioning spring and thus precisely locates the shaft relative to the second arm. The three bands may be integrally formed in a "Y" shape.

The bands can be connected to their respective arms with pins so that the bands are free to pivot slightly with respect to the arms, shaft and one another to compensate for small errors in the dimensions of a parts or the alignments of the parts.

In another preferred embodiment of the present invention, the carriage track comprises a pair of parallel rods and the carriage includes an extruded metal based member having a plate portion and two parallel rib portions on the principal surface thereof. Linear bearings are disposed against at least one of the parallel ribs. The linear bearings receive the parallel rods of the carriage track and the carriage is slidably movable along the track. In a preferred embodiment, the linear bearings are cylindrical and are each pressed against a rib and the plate portion so that the longitudinal axis of the bearings are adjusted to be parallel with the pair of rods of the carriage track.

Brief Description of the Drawings

Figure 1 is an exploded, pictorial diagram of a magnetic disk system employing structures of the present invention.

Figure 2 is a plan view of the magnetic disk system of Figure 1.

Figures 3a and 3b are details of the magnetic disk system of Figures 1 an 2 showing the dual head arrangement and the flexing of the cable connector assembly.

Figure 4 is a plan view of a cable connector assembly of an embodiment of the present invention.

Figures 5a and 5b show Prior art cable assemblies.

Figures 6a, 6b and 6c are a side elevation and two plan views of band actuator embodiments of the present invention.

Figure 7 is a plan view of a prior art band actuator.

Figures 8a and 8b are a side elevation and a plan view in cross-section of a carriage and track assembly constructed according to the teachings of the present invention.

Figure 9 is a side elevation of a prior art carriage and track assembly.

Figure 10 is a side view of the recording system illustrated in Figure 2.

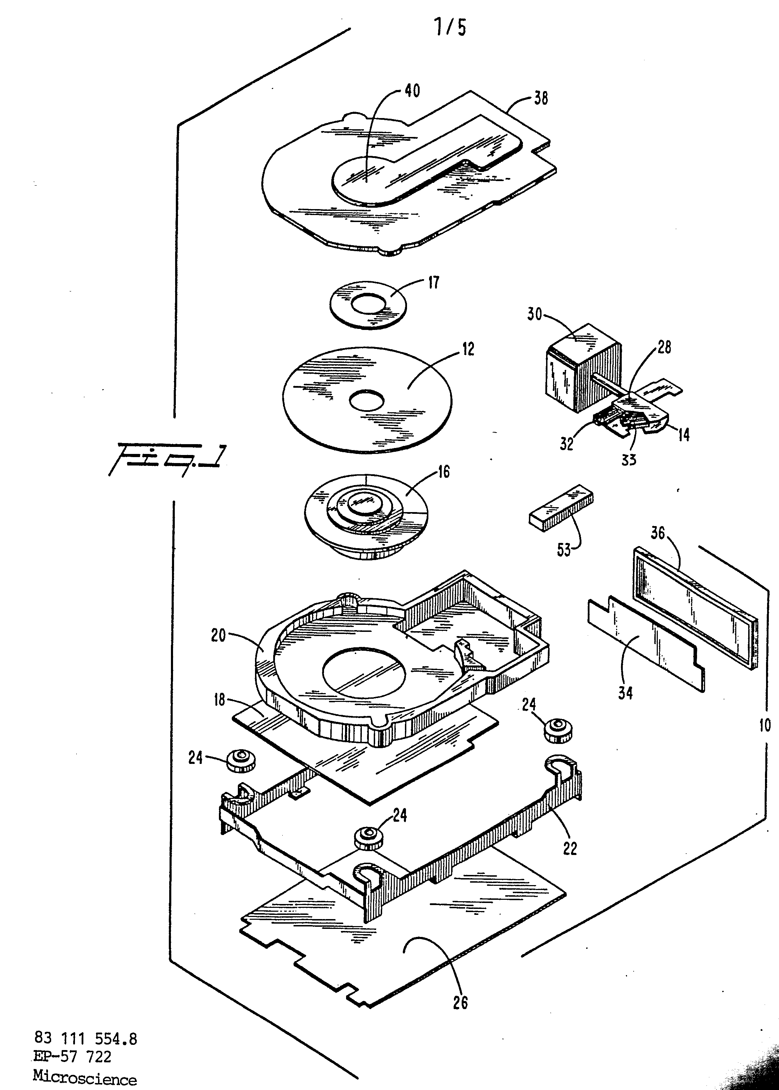

Figure 1 is a exploded, pictorial diagram of a magnetic disk system employing structures of the present invention.

The disk system consists of a stationary chassis 10, a magnetic storage disk 12 and a movable transducer carriage 14. The magnetic storage disk 12 is rotated with respect to the stationary chassis 10 by a brushless DC motor 16. The motor 16 is controlled by circuitry on a motor control circuit board 18 sandwiched between chassis frame elements 20 and 22. The disk is connected to the motor by disk clamp 17. The chassis frame 20 is mounted on the chassis frame element 22 by means of shock mountings 24. An interface circuit board 26 is located underneath the chassis frame element 22.

The movable carriage assembly 14 includes a carriage 28 and a stationary stepper motor 30 coupled thereto. Transducer heads 32 and 33 on the carriage 28 are electrically connected to a preamplifier circuit board 34 sandwiched between the chassis frame 20 and a front panel 36 of the system. The carriage assembly and disk are covered by a cover assembly 38 including a breather filter 40.

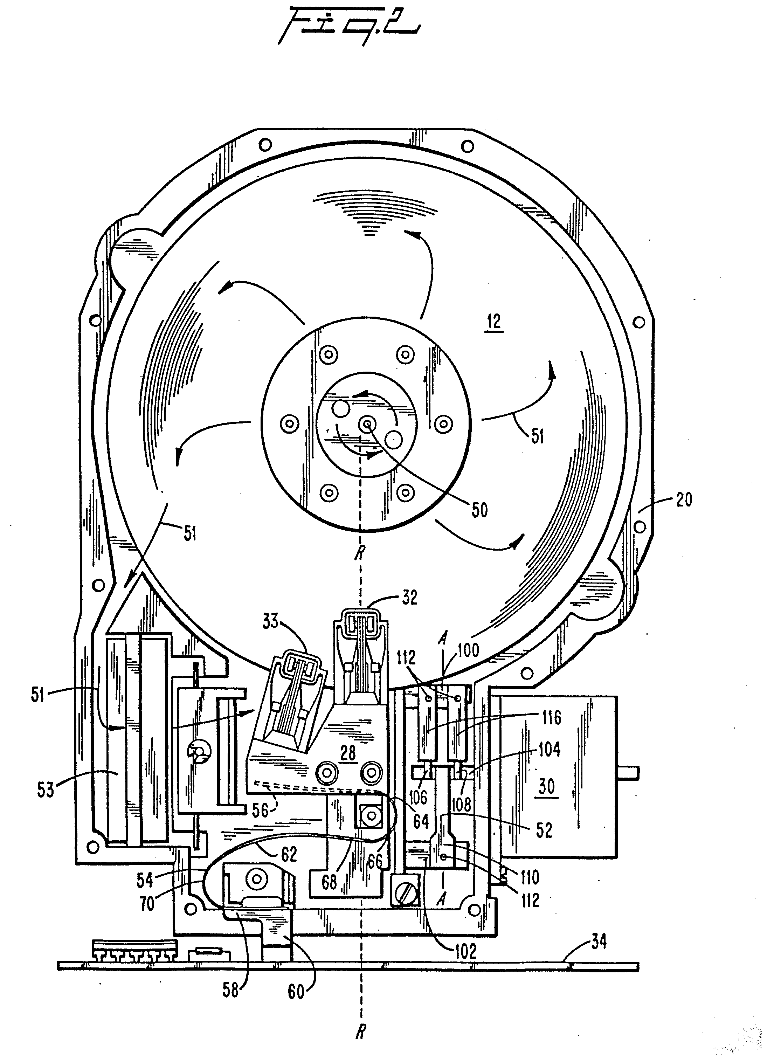

Structures associated with the movable carriage assembly will now be described in greater detail with reference to Figure 2, wherein structures similar to those shown in Figure 1 are identified by like numerals. The drawing of Figure 2 is a plan view of a magnetic disk system embodiment of the present invention and is drawn approximately to scale. The system employs a small rigid magnetic storage disk 12 which in a preferred embodiment is approximately 5-1/4 inches in diameter. The disk is rotated about an axis of rotation 50 which is perpendicular to the plane of the drawing. The carriage assembly 28 carries transducer heads 32 and 33, and is movable along a radial path R-R which intersects the axis of rotation 50.

Air flow through the system is precisely controlled. The direction of air flow is indicated by arrows 51. An air filter 53 is provided to reduce suspended matter in the flow.

In accordance with one aspect of the present invention, two transducer heads 32 and 33 are mounted on the side of the carriage 28 that is visible in Figure 2.

The carriage 28 is translated along the radial path R-R by means of the stepper motor 30 and drive mechanism 52. The carriage 28 may be slidably mounted on a track (not shown) which defines a path of movement for the carriage parallel to the radial axis R-R. The stepper motor 30 advances and retracts the carriage 28 in descrete steps, so that information may be recorded on or read from the disk in well defined, concentric tracks.

0109678

One electromagnetic transducer head 32 moves along a generally radial path parallel to the radial axis R-R. The other head is both radially and circumferentially offset from the first head and travels along a path that is parallel to that of the first one. Due to the radial offset, the two heads cover different, concentric sections of the disk. Each section might contain a number of tracks equal to the number of steps in the travel of the carriage, so that the packing density of the disk is in essence doubled. Furthermore, the circumferential offset provides added space that is necessary to accomodate the second head and that is not available if the heads were placed in a line.

The radial offset of the two heads is determined so as to provide optimum utilization of the disk surface. For example, if this offset is equal to approximately one-half the radius of the disk, the two heads 32 and 33 will respectively traverse different, mutually exclusive sections of the disk. In this case, each section can have a number of recording tracks equal to the number of steps in the travel of the carriage, thereby doubling the information storage capacity of the disk. Alternatively, the two heads might be placed somewhat closer together in the radial direction, so that their respective areas of coverage partially overlap. In this case, the increase in storage capacity over a single head system will be less than 100%, but access time to the overlapping area of coverage will be correspondingly decreased. In other words, since information stored in the overlap area can be read with either head, the time required to access this information will only be the time that it takes the closer one of the two heads to reach the track on which the information is stored.

-12-

Typically, information is stored on both sides of a magnetic recording disk. Of course, the dual head arrangement of the present invention can be implemented on both sides of the disk, as depicted in Figure 10. In such a case, another pair of heads 32' and 33' are mounted on the carriage and disposed on the underside of the disk.

In order to write information onto the surface of the disk 12 and subsequently retrieve it, the magnetic transducer heads 32 and 33 are disposed in close proximity thereto. The magnetic disk 12 is rotated about the axis of rotation 50 at a constant angular velocity by the motor 16. During the recording of information, electrical impulses are applied to the heads, causing them to generate a magnetic field that orients the magnetic particles on the surface of the disk, to thereby store information. For subsequent reading of the stored information, the head is responsive to the magnetic orientation of the particles and generates electrical signals indicative of this orientation.

The transducer heads 32 and 33 can be electrically connected to the input or preamplifier circuit board 34 by means of a ribbon cable and connector assembly 54. The ribbon cable and connector assembly consists of a first portion 56 fixed to the carriage 28, a second portion 58 fixed to the disk drive chassis, a connector 60 for electrically connecting the cable to the circuit board 34 and a third ribbon cable portion 62 contiguous with the first and second portions. The third portion of the ribbon cable is held in an "S" shaped configuration so that the cable extends away from the first portion of the cable in region 64 and thus away from the radial path R-R.

-13-

Then, the cable curves back inwardly in region 66 toward the radial path R-R.  Then, the third portion of the cable passes the radial path at 68 and extends away from the radial path.  Finally, the cable curves back toward the radial R-R at 70 until it reaches the second cable portion which is fixed to the disk drive chassis frame 20.  The "S" figure expands and contracts along an axis parallel to the radial path R-R as the carriage moves radially with respect to the chassis.  The third portion of the cable is constrained so that the "S" shaped figure lies between the location of the magnetic disk and heads, the circuit board 34 and the drive motor 30 and drive mechanism 52.

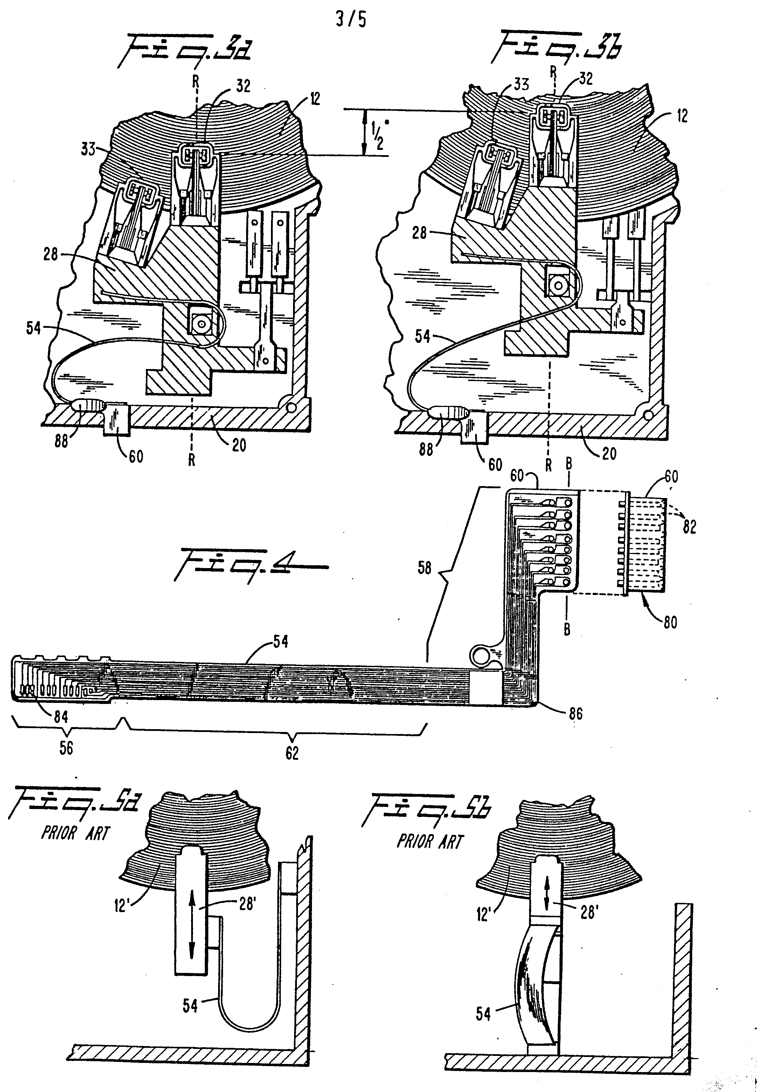

Figures 3a and 3b are details of the magnetic disk system of Figures 1 and 2 wherein similar structures are identified by like numerals.  Figures 3a and 3b show the flexing of the cable connector assembly as the carriage is moved along the radial axis R-R.  In Figure 3a the heads 32 and 33 are relatively close to a radial edge of the disk 12.  In Figure 3b the heads and carriage 28 have been translated toward the center of the disk 12.  As indicated in the figure the total distance of movement of the heads from the radially outermost radially innermost location may be on the order of 5 cm.  In response to this movement the "S" shape configured by the cable assembly 54 has been expanded or elongated in a direction generally parallel to the radial axis R-R of movement of the carriage 28.

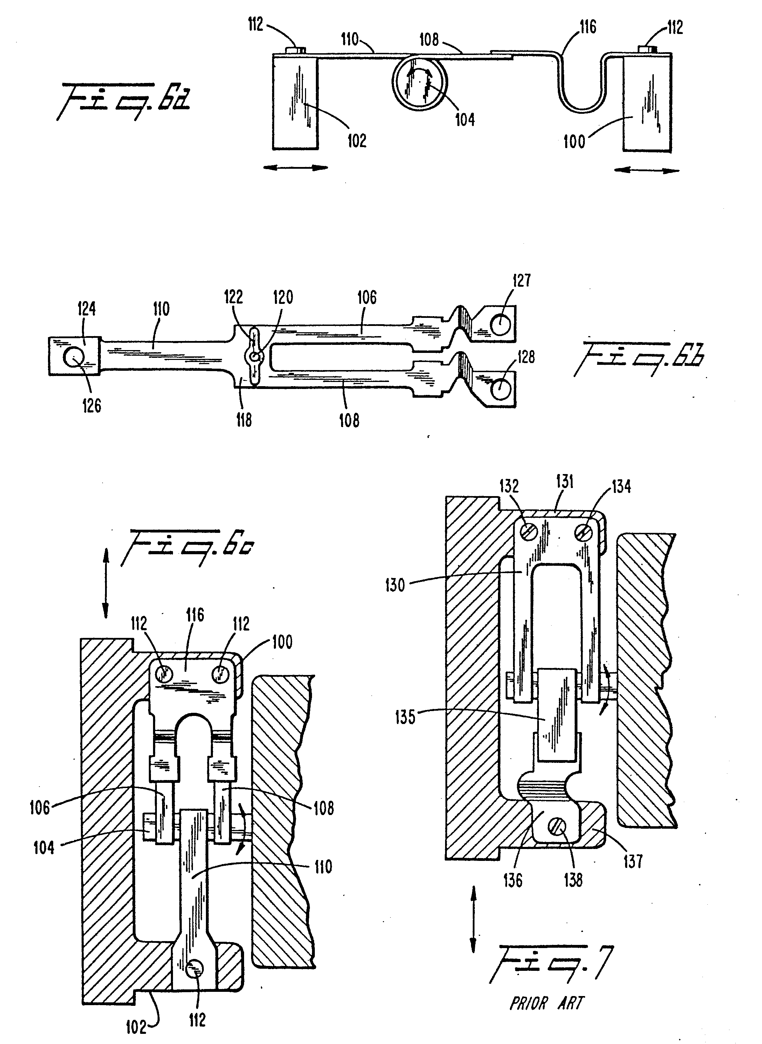

The cable and connector assembly 54 is shown in an unbent configuration in Figure 4.  The first, second and third portions of the cable are indicated by the brackets 56, 58 and 62, respectively.  The connector 60 is shown in partial phantom in a side elevational detail 80.  As shown in Figure 4 the connector can take the form of a socket having apertures 82 containing conductors which are interfitted with conductors lying on a circuit board to which the cable and connector assembly is attached.

Advantageously, the cable can be made of a polymer film ribbon with multiple parallel metal strips embedded therein. Exposed contacts 84 in ribbon portion 56 may be connected to the transducer heads. An "L" shaped portion 86 of the cable is looped over the chassis frame 20 at location 68 as shown in Figures 3a and 3b.

In this specification reference is made to the principal plane of the ribbon cable. In Figure 4 that plane is the plane of the figure. The plane is distorted when the cable and connector assembly is installed in the disk drive system and held in the "S" shaped configuration. However, that distorted plane of the portion 62 of the ribbon remains approximately parallel to the axis of rotation of the magnetic storage disk.

The configuration and orientation of the ribbon cable and connector assembly 28 may be compared with the prior art structure shown in Figure 5a and 5b. In these structures a carriage assembly 28' is shown having a direction of radial movement with respect to a disk 12'. In both of these examples the ribbon cables 54' have a "U" shaped configuration.

Referring once more to Figure 2, the drive mechanism 52 of the system will now be described in greater detail. The carriage 28 is formed with a first arm 100 and a second arm 102. Advantageously, the arms 100 and 102 may be parallel to one another and perpendicular to the path of radial motion R-R of the carriage along its track. The stepper motor 30 for moving the carriage along the track is stationary with respect to the track and has a rotatable shaft 104 generally parallel to the first and second arms 100 and 102. A first flexible band 106 may be attached to the first arm 100 and to the shaft 104 so that the band is wound and unwound about the shaft as the shaft rotates and the carriage moves responsively thereto. A second flexible band 108 may be attached to the first arm 100 at a point displaced from the first band and attached to the shaft 104 at a point displaced from the first band, the second band being wound and unwound about the shaft in a like manner to the first. A third flexible band 110 may be attached to the second arm 102 and to the shaft 104 at a point between the points of attachment of the first and second bands, the third band being wound and unwound about the shaft in an opposite direction of the first two bands as the shaft rotates.

In a preferred embodiment of the present invention the first, second an third bands are attached to their respective arms with pins 112 so that the bands are free to pivot slightly with respect to the arms, the shaft and one another.

Figure 6a is a side elevation of the band actuator embodiment of Figure 2, wherein similar structures are identified by like numerals. As shown in the figure, the second band 108 and the third band 110 wind about the shaft in opposite directions as the shaft is rotated. Advantageously, the first and second bands may be formed with a spring portion 116 which holds the bands under tension.

Figure 6b is a plan view of a band structure employed in a preferred embodiment of the present invention. In this embodiment, the bands 106, 108 and 110 are formed integrally and connected at a center portion 118 which is connected to the shaft 104 by means of a suitable fastener inserted through the aperture 120. A reinforcement leaf 122 may overlie the band structure. Likewise, reinforcement leaves 124 may be provided about apertures 126, 127, 128 for receiving the pins 112. Apertures 126, 127, 128 are slightly larger in diameter than pins 112 so that the bands can orient and align themselves in use. As will be seen from the figure this integral structure forms a "Y" shaped configuration (the "Y" of Figure 6 being oriented on its side).

Figure 6c is a plan view of another embodiment of the band actuator of this invention. In this embodiment, a single unit double spring unit 116 connects bands 104 and 106 to arm 100. Again, it is the paired bands that incorporate the springs and the attachment of the bands to arms 100 and 102 is accomplished via pins 112 and apertures. Although not shown, in all these embodiments it is possible to employ cover plates over the pins to prevent the band from "jumping" off. These plates do not clap the bands rigidly to the arms so they are free to pivot about the pins.

Figure 7 is a plan view of a prior art band actuator. In this device the two outer bands are formed into a U 130 that is rigidly affixed to arm 131 via screws 132 and 134. The center hand 135 is attached to spring unit 136 which is in turn rigidly affixed to arm 137 by screw 138. This works well when all parts are perfectly aligned. However, in a real device setting with real manufacturing tolerances two problems arise. First, the two outer bands become differently tensioned and wear rapidly. Their rigid attachment prevents them from correcting for this. The bands are rigidly attached and are thus not free to pivot with respect to one another to account for alignment or dimensional errors in the components of the system. The central band, because it carries the tensioning spring 136, does not provide a precise distance between the motor shaft and arm 137 and thus it becomes difficult to position the carriage with needed precision with age and wear of the drive.

Figures 8a and 8b are a side elevation and plan view in cross section of a carriage and track assembly constructed according to the teachings of the present invention. The stationary carriage track may comprise a pair of parallel rods 150. The carriage 28 is disposed to slidably engage the parallel rods 150 by means of the linear bearings 152.

A portion of the carriage assembly includes an extruded metal base member 154 having a plate portion 156 and two parallel rib portions 158. A first linear bearing 160 is disposed against one of the parallel ribs and adapted for slidably engaging one of the parallel rods. Two more linear bearings 162 are disposed against the other of the parallel ribs and adapted for slidably engaging the other of the parallel rods. In a preferred embodiment of the present invention the rib portions 158 are perpendicular to the plate portion. The linear bearings are cylindrical and contain ball bearings 164. The cylindrical linear bearings may be pressed against a rib and the plate portion so that the longitudinal axes of the bearings are parallel to the line of intersection of the rib and plate portions and parallel to the direction of movement of the carriage along the track. Advantageously, the linear bearings 152 may be pressure loaded in position by brackets 166 and upper plate 168. The direction of this loading is indicated schematically by the arrows 170.

Figure 9 is the side elevation of a prior art carriage and track assembly. The carriage is intended to ride on parallel rods 150' by means of linear bearings 152'. The linear bearings 152' are pressure fitted into apertures in a solid plate 190 employed as the base of the carriage assembly. Correct alignment of the linear bearings requires extremely high tolerance machining of the base piece 190.

PATENTANWÄLTE
# WUESTHOFF - v. PECHMANN - BEHRENS - GOETZ
## EUROPEAN PATENT ATTORNEYS

DR.-ING.
DR. PHIL.

**0109678** (6)

DIPL.-ING. GERHARD PULS (1952-1971)
DIPL.-CHEM. DR. E. FREIHERR VON PECHMANN
DR.-ING. DIETER BEHRENS
DIPL.-ING.; DIPL.-WIRTSCH.-ING. RUPERT GOETZ

EP-57 722
Microscience Intern. Corp.
Mountain View, Cal., USA

D-8000 MÜNCHEN 90
SCHWEIGERSTRASSE 2

TELEFON: (089) 66 20 51
TELEGRAMM: PROTECTPATENT
TELEX: 5 24 070

CLAIMS:

1.   A high-density magnetic disk drive information storage system for use with a rotatable magnetic recording disk of relatively small size, particularly of not more than 13.3 cm diameter, especially of the winchester type, comprising:
a disk drive chassis (10) including an amplifier circuit and a motor (16) for rotating a magnetic storage disk (12) about an axis of rotation (50);
a carriage (28) that is linearly translatable on a carriage track along a radial axis of the disk (12) by means of a drive mechanism;
a dual magnetic head assembly the first magnetic head (32) of which beeing mounted on the carriage so as to be translated along the radial axis by movement of the carriage (28);
c h a r a c t e r i z e d  in that
the second magnetic head (33) is mounted on the carriage (28) for common movement with said first head (32), the second head (33) being radially and circumferentially offset from the first head with respect to the rotational axis (50) of the disk (12) and translatable along a path (R-R) that is parallel to and laterally spaced from the radial axis.

2.    The disk drive according to claim 1
c h a r a c t e r i z e d   in that
the frist head (32) traverses a first section of the disk
(12) and the second head traverses a second section of the
disk.

3.    The disk drive according to claim 2
c h a r a c t e r i z e d   in that
the first and second disk sections are mutually exclusive.

4.    The disk drive according to claim 2
c h a r a c t e r i z e d   in that
the first and second disk sections are overlapping.

5.    The disk drive according to any of claims 2 to 4
c h a r a c t e r i z e d   in that
the first and second heads (32, 33) move concurrently
inwardly and outwardly in their traversal of their
respective sections.

6.    The disk drive according to any of claims 1 to 5
wherein a flexible, multiconductor ribbon cable assembly
(54) electrically connects both magnetic transducer heads
(32, 33) to the amplifier circuit,
c h a r a c t e r i z e d   in that
the ribbon cable assembly includes:
a first portion (56) fixed to the carriage (28),
a second portion (58) fixed to the disk drive chassis
(10),
and a third portion (62) located between the first and
second portions (56, 58) and configured in an "S" figure.

7.    The disk drive according to claim 6
c h a r a c t e r i z e d  in that
the "S" figure lies in a plane generally perpendicular to
the axis of rotation (50) of the magnetic storage disk
(12).

8.    The disk drive according to claims 6 or 7
c h a r a c t e r i z e d  in that
an input section of the amplifier circuit is located on a
circuit board (34) whose principal plane is parallel to
the axis of rotation (50)
and wherein the second portion (58) of the ribbon cable
assemgly (34) includes a connector (60) which interfits
with conductors on the circuit board (34) for electrically
connecting the transducer heads (32, 33) to the input
section of the amplifier.

9.    The disk drive according to any of claims 1 to 8
c h a r a c t e r i z e d  in that
the carriage (28) is moved by a drive motor (30) along a
path (R-R) which is radial to the disk (12) and extends
through at least one of the transducer heads (32, 33).

10.    The disk drive according to claim 9
c h a r a c t e r i z e d  in that
the "S" shaped figure lies between the location for the
magnetic disk (12), the circuit board (34) and the drive
motor (30).

11.    The disk drive according to claim 10
c h a r a c t e r i z e d  in that
the principal plane of the third portion (62) of the
ribbon cable assembly (59) is approximately parallel to
the axis of rotation (50),

12.  The disk drive according to any of claims 6 to 11
c h a r a c t e r i z e d  in that
the third portion (62) of the ribbon cable assembly (54)
defines the "S" figure by extending away from the first
portion (56) of the cable and away from the radial path of
movement (R-R) of the carriage (28), then curving back
inwardly toward the radial path of movement, then passing
the radial path and extending away therefrom, then curving
back toward the radial path of movement until it reaches
the second portion (58) which is fixed to the disk drive
chassis (10).

13.  The disk drive according to any of claims 6 to 11
wherein the carriage (28) has a first arm (100) and a
second arm (102) parallel to the first arm, the arms being
perpendicular to a direction of motion (R-R) of the
carriage along the track;
and wherein the drive mechanism for moving the carriage
along the track includes a stepper motor (30) stationary
with respect to the track, having its rotatable shaft
(104) arranged parallel to the first and second arms (110,
102) and located therebetween, and being coupled to the
carriage (28) by a band actuator,
c h a r a c t e r i z e d  in that
the band actuator includes:
a first flexible band (106) attached to the first arm
(100) and to the shaft (104) so that the first band is
wound and unwound about the shaft as the shaft rotates;
a second flexible band (108) attached to the first arm
(100), at a point displaced from the first band (106), and
attached to the shaft (104), at a point displaced from the
first band, the second band being wound and unwound about
the shaft as the shaft rotates; and
a third flexible band (110) attached to the second arm
(102) and to the shaft (104), at a point between the
points of attachment of the first and sedond bands (106,
108), the third band (110) being wound and unwound about
the shaft as the shaft rotates.

14.  The disk drive according to claim 13
c h a r a c t e r i z e d  in that
the first, second and third bands (106, 108, 110) are
attached to their respective arms (100, 102) with pins
(112) so that the bands are free to pivot slighthly with
respect to the arms, the shaft (104) and one another.

15.  The disk drive according to claims 13 or 14
c h a r a c t e r i z e d  in that
the first and second bands (106, 108) are formed with a
spring portion for tensioning the portion of the band
spanning between the frist arm (100) and the shaft (104).

16.  The disk drive according to claim 8
c h a r a c t e r i z e d  in that
the bands (106, 108, 110) are integrally formed in a "Y"
shaped configuration so that all three bands are joined at
a central portion (118) which is attached to the stepper
motor shaft (104).

17.  The disk drive according to any of claims 1 to 16
wherein the track comprises a pair of parallel rods (150),
c h a r a c t e r i z e d  in that
the carriage (28) includes:
an extruded metal base member (154) having a plate portion
(156) and two parallel rib portions (158) on a principal
surface of the plate portion;
a frist linear bearing (160) disposed against the base
member (154) and one of said parallel rib portions (158)
and adapted for slidably engaging one of the parallel rods
(150); and
a second linear baring (162) disposed against the base
member (154) and the other of said parallel rib portions
(158) and adapted for slidably engaging the other of the
parallel rods (150).

0109678

EP-57 722

18. The disk drive according to claim 17
c h a r a c t e r i z e d in that
the rib portions (158) are each perpendicular to the plate
portion (156) and in that the linear bearings (160, 162)
are cylindricaland are each pressed against a rib and the
plate portion (156) so that the longitudinal axes of the
bearings (160, 162) are parallel to the rods (150) which
comprise the track.

19. The disk drive according to claim 18
c h a r a c t e r i z e d in that
the cylindrical linear bearings (160, 162) are formed with
a bore along their longitudinal axes, which bore receives
one of the pair of parallel rods (150).

1058

0109678.

/5

Fig.1

111 554.8
EP-57 722
Microscience

Fig.2

3/5

**Fig.3a**

**Fig.3b**

**Fig.4**

**Fig.5a**
*PRIOR ART*

**Fig.5b**
*PRIOR ART*

0109678

4/5

Fig.6a

112 110 108 116 112
104
102 100

Fig.6b

124 110 122 120 106 127
126 118 108 128

Fig.6c

112 116 112 100
106
104
108
110
102 112

Fig.7

132 131 134
130
135
136 138 137

PRIOR ART

Fig.8a

Fig.8b

Fig.9

PRIOR ART

Fig.10

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| D,A | US-A-4 331 991   (MOREHOUSE et al.)<br>* Column 1, lines 9-20; figure 1 * | 1,2 | G 11 B   5/55<br>G 11 B   21/02 |
| A | IBM TECHNICAL DISCLOSURE BULLETIN, vol. 21, no. 1, June 1978, New York I.W. BOLTON et al. "Dual arm for rotary head positioner", page 363 | 1,2,4 | |
| A | US-A-3 124 789   (WASYLENKO)<br>* Figure 1 * | 1,9 | |
| A | US-A-4 209 813   (BRYER)<br>* Column 5, lines 46-56; figures 1, 3, 7 * | 6 | |
| A | EP-A-0 014 231   (IBM)<br>* Page 12, last paragraph - page 13, paragraph 4; figures 3, 4 * &<br>US-A-4 285 018 (Cat. D) | 8 | TECHNICAL FIELDS SEARCHED (Int. Cl. ³)<br><br>G 11 B   5/00<br>G 11 B   21/00 |
| A | EP-A-0 060 341   (TELETYPE)<br>* Figure 2 * | 13,16 | |
| A | DE-A-2 747 428   (ARVIN INDUSTRIES)<br>* Page 14, paragraph 2 - page 16, paragraph 1; figures 4, 5 * | 13,14 | |
| | --- -/- | | |

The present search report has been drawn up for all claims

| Place of search<br>BERLIN | Date of completion of the search<br>26-01-1984 | Examiner<br>WIBERGH S.R. |
|---|---|---|

0109678

European Patent
Office

**EUROPEAN SEARCH REPORT**

Application number

EP  83 11 1554

| | DOCUMENTS CONSIDERED TO BE RELEVANT | | Page  2 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| A | ELECTRICAL DESIGN NEWS, vol. 27, no. 17, September 1982, Boston C. WARREN "Newest five-and-a-quarter-in. Winchester disk drives boost capacity in standard-sized packages", pages 51-62 * Page 52 * | 13,15 | |
| A | DE-A-1 524 958  (NATIONAL CASH REGISTER) * Page  5, last paragraph - page 6, paragraph 2; figures 3-5 * | 17,19 | |
| A | US-A-4 170 146  (OWENS) * Column  3, lines 43-48; column 4, lines 15-38; figures 2, 3 * | 13,16 17,19 | |

TECHNICAL FIELDS
SEARCHED (Int. Cl. ³)

The present search report has been drawn up for all claims

| Place of search BERLIN | Date of completion of the search 26-01-1984 | Examiner WIBERGH S.R. |
|---|---|---|

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO Form 1503. 03.82